# FASCICULE DE BREVET EUROPEEN

(11) **EP 1 466 770 B1**
(45) Date de publication et mention de la délivrance du brevet: **26.07.2006**
(21) Numéro de dépôt: 04290933.3
(22) Date de dépôt: 08.04.2004
(51) Int. Cl.: B60J 10/00, B60J 10/08

(54) **Joint d'étanchéité pour une porte de véhicule destiné à être monté sur un support présentant au moins un angle à faible rayon de courbure**
Dichtungsprofil für eine Fahrzeugtüre zur Montage an einem Flansch mit mindestens einer gering gekrümmten Ecke
Sealing profile for a vehicle door to be mounted on a flange with at least one corner with a small bending radius

(30) Priorité: 11.04.2003 FR 0304544
(43) Date de publication de la demande: 13.10.2004
(73) Titulaire: HUTCHINSON, 75008 Paris (FR)
(72) Inventeur: Baratin, Sylvain, 45260 Vieilles Maisons (FR); Drivon, Stéphane, 45410 Chalette sur Loing (FR)
(74) Mandataire: Doireau, Marc

(56) Documents cités:
- WO-A-02/076778
- US-A- 4 374 880
- US-A- 4 708 898

## Description

L'invention concerne un joint d'étanchéité selon le préambule de la revendication 1, destiné à être monté sur une porte de véhicule à moteur présentant au moins un angle à faible rayon de courbure. Un tel joint d'étanchéité est divulgué par WO 02/076778 A.

Un tel joint d'étanchéité comprend notamment au moins deux parties : une première partie rigide ou semi-rigide de fixation sur un support, et une seconde partie plus souple et déformable qui assure l'étanchéité. A l'heure actuelle, les joints d'étanchéité qui sont utilisés pour assurer une étanchéité entre la caisse et les portes d'un véhicule à moteur par exemple, sont positionnés soit sur la caisse soit sur les portes elles-mêmes. Dans le cas où ces joints sont positionnés sur les portes du véhicule, ils y sont maintenus par des clips solidaires de la partie fixation du joint, par un rail de fixation monté sur la porte ou par un adhésif solidaire de la partie fixation du joint, sachant que cette dernière solution offre le meilleur compromis coût /poids/performance.

La seconde partie formant l'étanchéité pour de tels joints d'étanchéité peut présenter une forme tubulaire, ce qui les rend très tolérants en énergie de fermeture de porte mais peu robustes dans les rayons de la porte. Pour pallier cet inconvénient, les joints de porte subissent en général une opération de thermoformage afin de limiter leur affaissement dans les angles à faible rayon de courbure de la porte.

D'une manière générale, les joints adhésivés sur porte sont généralement montés sur leurs supports à la main ou par des systèmes automatisés de type statique. De tels joints sont généralement livrés sous une forme bouclée et subissent également une opération de thermoformage avant de les monter sur les portes. Cette opération de thermoformage permet de compenser leur affaissement dans un angle de la porte présentant un faible rayon de courbure.

A l'heure actuelle, les technologies permettent d'envisager la dépose de ces joints par des systèmes robotisés de type dynamique. Dans ce cas, il est préférable que le joint ne soit pas bouclé en anneau, de manière à ce qu'il soit guidé en continu par la tête de dépose du système robotisé.

Dans ces conditions, il est souhaitable d'envisager d'approvisionner ces joints sur une grande longueur, ces joints étant par exemple préalablement stockés sur une bobine, sur un plateau ou dans un container.

Un tel approvisionnement présente de nombreux avantages parmi lesquels on peut notamment citer :
- une réduction du temps de cycle de dépose du joint ;
- une suppression d'une intervention humaine pour charger un joint à chaque cycle ;
- une réduction considérable du nombre des emballages, puisqu'une seule bobine peut remplacer des dizaines de cartons contenant des joints bouclés ;
- une réduction des déchets et de la pollution ;
- une réduction du nombre des références, car aujourd'hui les joints sont spécifiques à chaque type de porte ; et
- une suppression de l'opération de soudage d'une languette de préhension placée sur l'adhésif pour chaque joint, lorsque ce dernier est de type adhésivé.

Malgré tous les avantages précités, une telle solution laisse toujours en suspens le problème de l'opération de thermoformage localisée sur ces joints dans les angles à faible rayon de courbure des portes, sachant que ces joints sont enroulés sur des bobines de grande longueur.

L'invention a donc notamment pour but de trouver un nouveau joint qui soit apte à simplifier ses opérations de montage, en particulier pour éviter toute opération de traitement spécifique à l'angle d'un support de réception à faible rayon de courbure, ce nouveau joint pouvant être notamment déposé par un système robotisé de type dynamique.

A cet effet, l'invention propose un joint d'étanchéité destiné à être monté sur un support présentant au moins un angle à faible rayon de courbure, ce joint comprenant au moins une partie de fixation souple ou semi-rigide fixé par un adhésif sur son support et une partie tubulaire élastiquement déformable destinée à assurer l'étanchéité, qui est caractérisé en ce que l'on donne à la partie élastiquement déformable du joint, à partir de sa partie de fixation, une forme sensiblement triangulaire avec deux piliers réunis l'un à l'autre par une voûte, les piliers formant entre eux, en section droite, un angle compris entre 10° et 30°, avantageusement de l'ordre de 20°, cet angle étant défini par deux droites passant sensiblement par le milieu des deux piliers au 2/5 et au 4/5 de la hauteur totale du joint à partir de sa partie de fixation, de sorte que, après montage du joint sur son support, la partie élastiquement déformable est telle qu'elle subit dans l'angle dudit support une déformation en section droite qui s'inscrit globalement dans celle du joint à l'état libre.

Ainsi, un joint selon l'invention ne subira une perte de hauteur d'au plus 2,5 mm dans un angle du support à faible rayon de courbure.

Un joint selon l'invention présente l'avantage de pouvoir être monté directement sur une porte de véhicule à moteur sans avoir à subir une quelconque opération de traitement spécifique, en particulier un thermoformage dans les angles de la porte présentant un faible rayon de courbure, ce qui réduit son coût de fabrication tout en conférant au joint des propriétés améliorées.

En effet, selon un autre avantage d'un joint selon l'invention, la forme qui lui est donnée est telle que l'affaissement de sa partie élastiquement déformable est contrôlé pour qu'il garde globalement la même forme, ce qui lui confère de bonnes propriétés d'étanchéité dans les zones à faible rayon de courbure et à faible angle.

D'autres avantages, caractéristiques et détails de l'invention ressortiront du complément de description qui va suivre en référence aux dessins annexés, donnés uniquement à titre d'exemple et dans lesquels :
- les figures 1 et 2 sont deux vues en coupe de deux joints d'étanchéité selon l'art antérieur évoqué en préambule ;
- la figure 3 est une vue en coupe d'un joint d'étanchéité selon l'invention ;
- la figure 4 est une vue en coupe du joint d'étanchéité de la figure 3 à l'état déformé ;
- la figure 5 est une vue en coupe d'un joint d'étanchéité selon l'art antérieur à l'état déformé ;
- la figure 6 est une vue en coupe d'un autre mode de réalisation d'un joint d'étanchéité selon l'invention ;
- la figure 7 est une vue en coupe du joint d'étanchéité de la figure 6 dans un angle à faible rayon de courbure ;
- les figures 8 et 9 sont des vues en coupe de deux autres modes de réalisation d'un joint d'étanchéité selon l'invention ; et
- la figure 10 est une vue en perspective partielle d'un joint selon l'invention monté dans une zone de son support de réception présentant un angle à faible rayon de courbure.

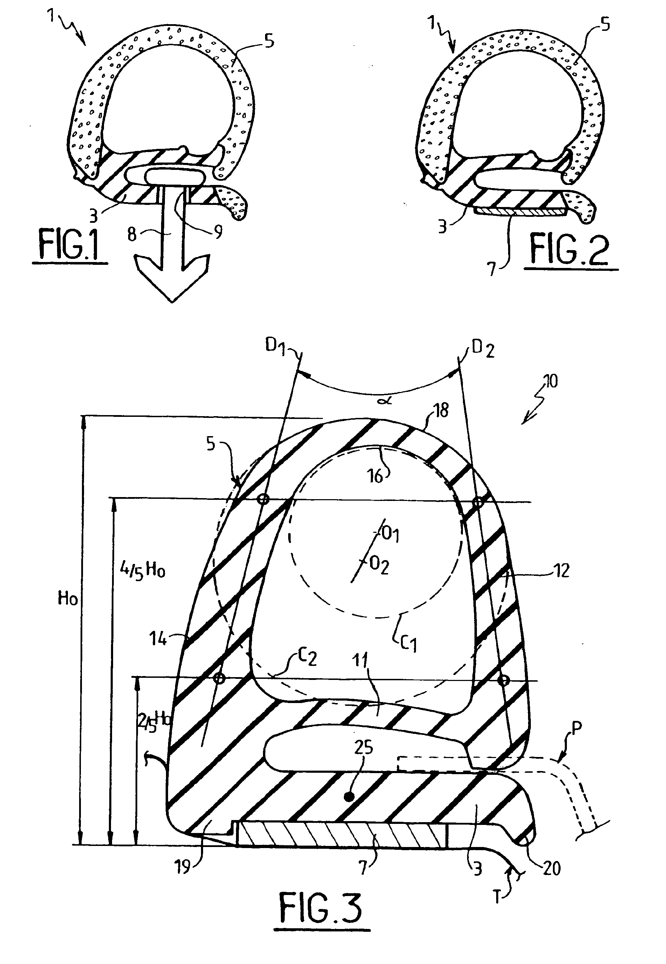

Les joints d'étanchéité 1 tels qu'illustrés aux figures 1 et 2 représentent l'art antérieur tel qu'évoqué en préambule. Ces joints 1 notamment destinés à assurer l'étanchéité sur une porte de véhicule à moteur, comprennent au moins une partie de fixation 3 souple ou semi-rigide, et une partie élastiquement déformable 5 qui peut être de forme tubulaire. De tels joints sont fabriqués par extrusion ou coextrusion de matériaux élastomères et/ou plastomères, et la partie de fixation 3 des joints peut comprendre un adhésif 7 pour fixer le joint sur son support.

Le joint d'étanchéité 1 de la figure 1 a sa partie de fixation 3 qui supporte des clips ou pions 8 rapportés dans des ouvertures 9 de la partie fixation 3. Par contre, le joint d'étanchéité 1 de la figure 2 a la face externe de sa partie fixation 3 sur laquelle est rapporté un adhésif double face 7.

Selon l'invention, le joint 10 présente une partie tubulaire élastiquement déformable 5 avec une forme telle que l'on évite toute opération de thermoformage local du joint, en particulier dans une zone de son support de réception présentant au moins un angle à faible rayon de courbure. D'une manière générale, il faut entendre par un support ayant un angle à faible rayon de courbure, un angle qui forme un angle globalement inférieur ou égal à 80° et sur un rayon de courbure inférieur ou égal à 80mm, sachant que cette définition ne constitue aucunement une limitation de la présente invention.

Un joint 10 selon l'invention est illustré à la figure 3, sa partie tubulaire élastiquement déformable 5 présentant notamment une forme triangulaire ou trapézoïdale en section droite avec deux piliers 12 et 14 qui s'élèvent à partir de la partie de fixation 3 du joint 10. Ces deux piliers 12 et 14 sont légèrement inclinés l'un vers l'autre et sont réunis l'un à l'autre par une partie voûtée en demi-cercle. L'effet de voûte est particulièrement intéressant car les piliers 12 et 14 vont avoir tendance à se rapprocher l'un de l'autre dans le cas d'une déformation de la partie élastiquement déformable 5, alors que dans les joints selon l'art antérieur les deux piliers vont au contraire s'écarter l'un de l'autre.

Cependant, le rapprochement des deux piliers 12 et 14 de la partie élastiquement déformable 5 du joint 10 va être limité par la voûte, ce qui aboutit à un joint 10 très stable dont la forme va peu varier avec une perte de hauteur limitée lorsqu'il est monté dans un angle à faible rayon de courbure de la porte, comme cela sera illustré plus loin.

Dans l'exemple illustré sur la figure 3, la partie élastiquement déformable 5 comprend une base 11 qui s'étend parallèlement à la partie de fixation 3 du joint 10 en étant reliée à celle-ci à une extrémité pour éviter toute contrainte permanente sur l'adhésif 7 et améliorer les énergies de fermeture de la porte.

Les deux piliers 12 et 14, d'une épaisseur moyenne de l'ordre de 2,5 mm, ne s'étendent pas parallèlement l'un à l'autre, mais forment un angle α qui est globalement compris entre 10° et 30°, avantageusement de l'ordre de 20°, et les parties supérieures interne 16 et externe 18 de la voûte sont globalement situées entre deux cercles C₁ et C₂, dont les centres O₁ et O₂ sont distants l'un de l'autre d'une distance supérieure à 0,7 mm.

Plus précisément, l'angle α qui est formé entre les deux piliers 12 et 14 de la partie élastiquement déformable 5 du joint 10 est défini globalement par deux droites D₁ et D₂ passant au 2/5 et au 4/5 de la hauteur totale Hₒ du joint 10 à partir de sa partie de fixation 3.

Le joint d'étanchéité 10 peut être fixé par tout moyen approprié sur son support de réception, en particulier au moyen d'une bande adhésive 7 rapportée sur sa partie de fixation 3, sachant que le pilier 14 de sa partie élastiquement déformable 5 est situé côté cadre de porte, alors que le pilier 12 va être déformé par la zone de caisse de la porte.

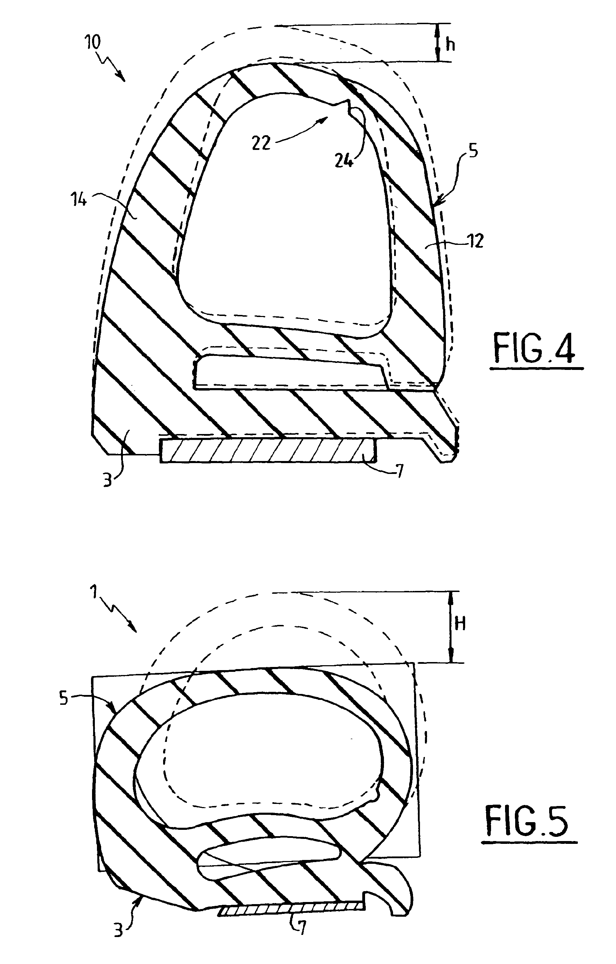

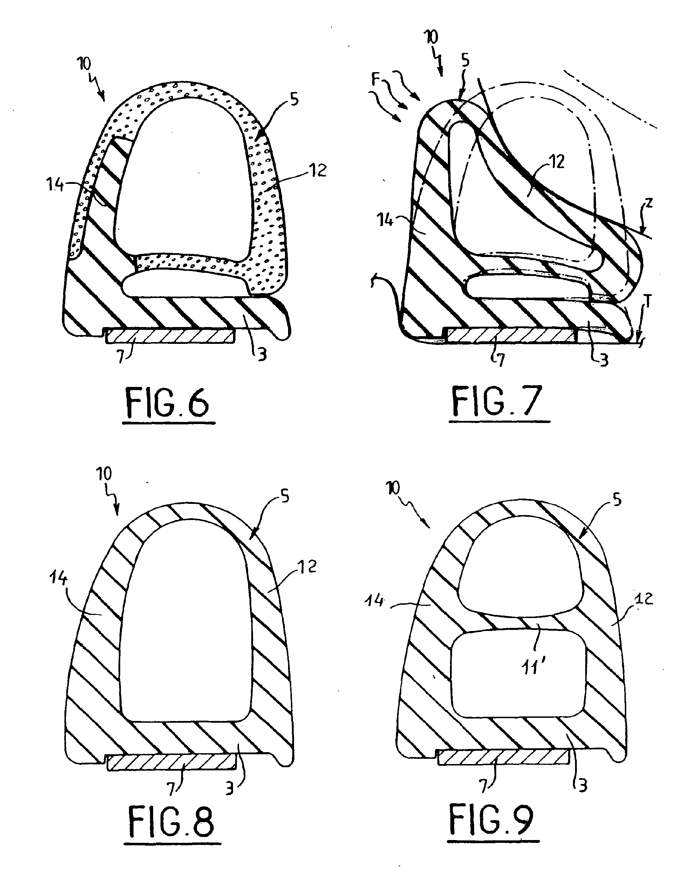

Avec un tel joint d'étanchéité 10 monté dans un angle à faible rayon de courbure d'une porte par exemple, comme cela est illustré sur la figure 4, on constate une perte de hauteur h du joint 10, qui est au plus égale à 2,5mm, et que la déformation du joint 10 est telle que sa section droite est contenue dans celle du joint 10 à l'état libre et représenté en traits pointillés. Au contraire, avec un joint 1 selon l'art antérieur illustré à la figure 5, la perte de hauteur H du joint est nettement plus importante et sa déformation est telle que sa section droite est beaucoup plus aplatie et déborde largement de celle du joint 1 à l'état libre et représenté en traits pointillés. C'est pour cette raison qu'il faut effectuer un traitement spécifique du joint 1 selon l'art antérieur, une opération de thermoformage par exemple, pour compenser en partie cette perte de hauteur H.

Par ailleurs, il est bien connu que pour certains véhicules, le joint d'étanchéité de porte sur porte peut masquer l'extrémité d'un panneau de garnissage de porte. Dans ce cas, comme cela est illustré en traits mixtes sur la figure 3, l'extrémité de ce panneau de garnissage P peut venir se loger, du côté du pilier 12 du joint 10, entre la base 11 de la partie élastiquement déformable 5 du joint et la partie de fixation 3. La partie élastiquement déformable du joint est ainsi rehaussée par le panneau de garnissage P, ce qui a pour effet d'obtenir une perte de hauteur h régulière du joint 10 dans un angle à faible rayon de courbure de la porte, et d'obtenir une déformation en section droite du joint 10 qui va d'autant mieux s'inscrire dans celle du joint à l'état libre. En outre, la tôlerie T qui constitue le support du joint 10 peut former un épaulement du côté du pilier 14 et qui va servir d'appui latéral à la partie élastiquement déformable 5 du joint 10 pour l'empêcher de basculer du mauvais côté.

La partie de fixation 3 du joint ou semelle peut également présenter des appuis 19 et 20 (figure 3) en surépaisseur, sensiblement de part et d'autre de l'adhésif 7 pour limiter la perte de hauteur h du joint dans un angle du support présentant un faible rayon de courbure.

Avantageusement, on peut ajouter des moyens 22 pour affaiblir les efforts de compressibilité du joint 10, ces moyens 22 pouvant être constitués par au moins un affaiblissement de matière 24 formant une charnière qui est ménagé dans la paroi interne 16 de la partie élastiquement déformable 5 du joint 10 par exemple, en particulier au niveau de sa voûte (figure 4).

D'une manière générale, les piliers 12 et 14 du joint 10 peuvent être dissymétriques avec, par exemple, un pilier 14 de plus grande épaisseur pour améliorer l'acoustique et le maintien du joint 10 dans les zones du support de réception ayant un faible rayon de courbure, et un pilier 12 de moindre épaisseur pour réduire les efforts de compressibilité du joint. Par ailleurs, pour limiter la perte de hauteur h du joint et la compression de la partie élastiquement déformable 5, comme cela est notamment illustré sur la figure 6, le pilier 14 peut être au moins en partie réalisé avec une matière élastiquement déformable souple, semi-rigide ou rigide. Enfin, les piliers 12 et 14 au niveau de la partie basse 11 formée par la partie élastiquement déformable 5 du joint 10 peuvent présenter une épaisseur plus importante pour réaliser en quelque sorte une poutre de maintien du joint 10.

Par ailleurs, la partie en forme de voûte qui réunit les deux piliers 12 et 14 de la partie élastiquement déformable 5 du joint 10 et qui forme la zone d'étanchéité de ce joint, présente une largeur en section droite qui est inférieure à celle des joints selon l'art antérieur. Il en résulte une plus grande flexibilité de positionnement du joint sur son support de réception, ce qui est notamment intéressant lors du montage du joint par un robot qui est propice à permettre des modifications de trajectoire.

Sur la figure 7, on a représenté le joint 10 de la figure 6 monté sur une porte et à l'état déformé par la zone de caisse Z de la porte fermée, le pilier épaissi 14 permettant d'améliorer l'arrêt des ondes acoustiques schématisées par les flèches F, le pilier 14 étant par exemple en appui contre un épaulement de la tôlerie T de la porte.

Sur les figures 8 et 9, deux autres joints d'étanchéité 10 selon l'invention sont représentés. Dans celui de la figure 8, les deux piliers 12 et 14 de la partie élastiquement déformable 5 sont directement reliés à la base de fixation 3 du joint 10, alors que celui de la figure 7 reprend celui de la figure 9 mais dans le cas d'une partie élastiquement déformable 5 constituée d'un bi-tube avec une paroi intermédiaire 11'.

D'une manière générale, une extrémité du joint 10 peut intégrer un ou plusieurs fils 25 dans sa partie de fixation 3 (figure 3), ainsi qu'un ou plusieurs feuillards, facilitant l'extrusion du joint mais surtout sa dépose par un système dynamique robotisé du joint. En effet, ces fils permettent de limiter l'allongement du joint au moment de son dépôt sur son support.

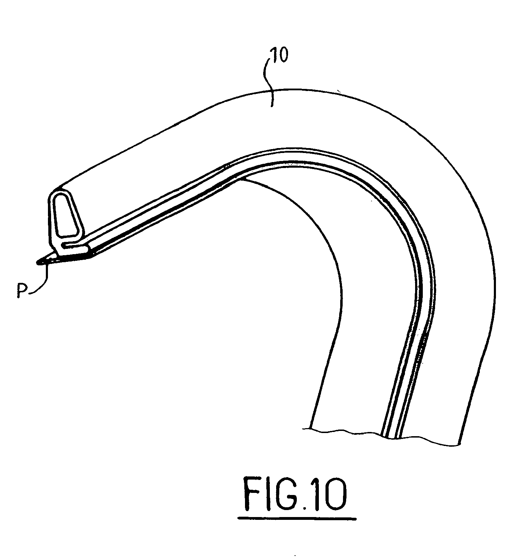

Enfin, sur la figure 10, on a représenté en perspective un joint d'étanchéité 10 monté sur un support de réception telle qu'une porte P dans une zone du support présentant un angle à faible rayon de courbure.

Un joint d'étanchéité selon l'invention peut être monté notamment sur toute porte, coffre ou capot d'un véhicule à moteur d'une manière manuelle, semi-automatique ou automatique, sachant que ce véhicule peut être indifféremment une voiture, un utilitaire, un camion, un bus, un train, un avion...

## Revendications

1. Joint d'étanchéité destiné à être monté sur un support de réception, en particulier sur une porte de véhicule automobile, présentant au moins un angle à faible rayon de courbure, ce joint comprenant au moins une partie de fixation (3) souple ou semi-rigide pour être fixé par un adhésif (7) sur son support et une partie tubulaire élastiquement déformable (5) destinée à assurer l'étanchéité, **caractérisé en ce que** l'on donne à la partie élastiquement déformable (5) du joint, à partir de sa partie de fixation (3), une forme sensiblement triangulaire avec deux piliers latéraux (12, 14) réunis l'un à l'autre par une voûte et qui forment entre eux un angle (α) de l'ordre de 10° à 30°, ledit angle (α) étant défini à partir de deux droites (D1, D2) passant sensiblement par le milieu des piliers (12, 14) au 2/5 et au 4/5 de la hauteur totale du joint à partir de sa partie de fixation (3), de sorte que, après montage du joint sur son support, la partie élastiquement déformable (5) est telle qu'elle subit dans ledit angle du support une déformation en section droite qui s'inscrit globalement dans la section droite du joint à l'état libre.

2. Joint d'étanchéité selon la revendication 1, dans lequel on forme un angle (α) de l'ordre de 20° entre les deux piliers (12, 14) de la partie élastiquement déformable (5) du joint.

3. Joint d'étanchéité selon la revendication 1 ou 2, dans lequel les parties supérieures interne (16) et externe (18) de la voûte de la partie élastiquement déformable (5) sont globalement situées entre deux cercles (C₁, C₂) dont les centres (O₁, O₂) sont distants l'un de l'autre d'une distance supérieure à 0,7mm.

4. Joint d'étanchéité selon l'une quelconque des revendications précédentes, dans lequel on obtient une perte de hauteur (h) du joint dans un angle à faible rayon de courbure du support, qui est au plus égale à 2,5 mm pour un angle ayant un rayon de courbure inférieur ou égal à 80mm et sur un angle inférieur ou égal à 80°.

5. Joint d'étanchéité selon l'une quelconque des revendications précédentes, dans lequel la forme de voûte qui relie les deux piliers (12, 14) de la partie élastiquement déformable (5) du joint est telle que cette zone qui assure l'étanchéité a, en section droite, une largeur réduite qui favorise le positionnement du joint par un robot sur son support de réception.

6. Joint d'étanchéité selon l'une quelconque des revendications précédentes, dans lequel la partie de fixation (3) comprend des appuis (19, 20) situés sensiblement de part et d'autre de l'adhésif (7) pour limiter la déformation du joint dans un angle de son support de réception ayant un faible rayon de courbure.

7. Joint d'étanchéité selon l'une quelconque des revendications précédentes, dans lequel la partie de fixation (3) du joint présente au moins un fil ou une armature d'aide au montage pour limiter son allongement lors de sa dépose.

8. Joint d'étanchéité selon l'une quelconque des revendications précédentes, dans lequel sont prévus des moyens (22) pour affaiblir les efforts de compressibilité du joint.

9. Joint d'étanchéité selon la revendication 8, dans lequel lesdits moyens (22) sont constitués par au moins un affaiblissement de matière (24) formant charnière qui est ménagé dans la partie élastiquement déformable (5) du joint.

10. Joint d'étanchéité selon l'une quelconque des revendications précédentes, dans lequel le joint est apte à venir en appui latéral contre son support (T) pour favoriser un maintien de sa partie élastiquement déformable (5).

11. Joint d'étanchéité selon l'une quelconque des revendications précédentes, dans lequel le joint est directement monté sur son support sans subir une quelconque opération de traitement spécifique dans un angle à faible rayon de courbure du support.

12. Joint d'étanchéité selon l'une quelconque des revendications précédentes, dans lequel le joint est stocké et approvisionné sur une chaîne de montage en bobine, en plateau ou en container de grande longueur.

## Claims

1. A sealing gasket for mounting on a support that is to receive it, in particular on a motor vehicle door, the support presenting at least one corner of small radius of curvature, the gasket comprising at least a flexible or semi-rigid fixing portion (3) for fixing to its support by an adhesive (7), and an elastically-deformable tubular portion (5) for providing sealing, the gasket being **characterized in that** the elastically-deformable portion (5) of the gasket is given a shape extending from its fixing portion (3) that is substantially triangular, with two lateral pillars (12, 14) united with each other by an arch and forming between them an angle (α) of about 10° to 30°, said angle (α) being defined using two straight lines (D₁, D₂) passing substantially through the middles of the pillars (12, 14) at 2/5ths and at 4/5ths of the total height of the gasket measured from its fixing portion (3), such that once it has been mounted on its support, the elastically-deformable portion (5) is such that in said corner of the support, its right section is subjected to deformation that occupies an area that lies substantially within the area occupied by the right section of the gasket when in the free state.

2. A sealing gasket according to claim 1, in which an angle (α) is formed that is about 20° between the two pillars (12, 14) of the elastically-deformable portion (5) of the gasket.

3. A support gasket according to claim 1 or claim 2, in which the inner and outer top portions (16, 18) of the arch of the elastically-deformable portion (5) are generally situated on two circles (C₁, C₂) having centers (O₁, O₂) that are spaced apart from each other by a distance of more than 0.7 mm.

4. A sealing gasket according to any preceding claim, in which a loss of gasket height (h) is obtained in a corner of small radius of curvature of the support that is no greater than 2.5 mm for a corner having a radius of curvature that is less than or equal to 80 mm and extending over an angle that is less than or equal to 80°.

5. A sealing gasket according to any preceding claim, in which the shape of the arch interconnecting the two pillars (12, 14) of the elastically-deformable portion (5) of the gasket is such that said zone which provides sealing presents, in right cross-section, reduced thickness which makes it easier for a robot to position the gasket on the support receiving it.

6. A sealing gasket according to any preceding claim, in which the fixing portion (3) includes bearing portions (19, 20) situated substantially on either side of the adhesive (7) in order to limit the deformation of the gasket in a corner of small radius of curvature of the support receiving the gasket.

7. A sealing gasket according to any preceding claim, in which the fixing portion (3) of the gasket presents at least one thread or reinforcement for providing assistance in assembly by limiting the extent to which it can be lengthened while it is being put into place.

8. A sealing gasket according to any preceding claim, in which means (22) are provided for weakening the compressibility forces of a gasket.

9. A sealing gasket according to claim 8, in which said means (22) are constituted by at least one hinge-forming line of weakness (24) formed in the elastically-deformable portion (5) of the gasket.

10. A sealing gasket according to any preceding claim, in which the gasket is suitable for bearing laterally against its support (T) so as to encourage holding of its elastically-deformable gasket (5).

11. A sealing gasket according to any preceding claim, in which the gasket is mounted directly on its support without being subjected to any specific treatment operation in a corner of the support having a small radius of curvature.

12. A sealing gasket according to any preceding claim, in which the gasket is stored and supplied to an assembly line on a drum, a pallet, or a container of great length.

## Patentansprüche

1. Dichtung, die dazu bestimmt ist, an einen Aufnahmeträger montiert zu werden, insbesondere an die Tür eines Kraftfahrzeugs, die mindestens einen Winkel mit geringem Krümmungsradius umfasst, wobei diese Dichtung mindestens einen elastischen oder halbstarren Befestigungsbereich (3) umfasst, um mittels eines Klebemittels (7) an ihrem Träger befestigt zu werden, sowie einen röhrenförmigen, elastisch verformbaren Bereich (5), der die Dichtheit sicherstellen soll, **dadurch gekennzeichnet, dass** der elastisch verformbare Bereich (5) der Dichtung von ihrem Befestigungsbereich (3) ausgehend eine im Wesentlichen dreieckige Form mit zwei seitlichen Armen (12, 14) hat, die miteinander durch eine Decke verbunden sind und die zwischen sich einen Winkel (α) von etwa 10 bis 30° bilden, welcher Winkel (α) ausgehend von zwei Geraden (D1, D2) definiert wird, die im Wesentlichen durch den Mittelpunkt der Arme (12, 14) führen, und zwar bei 2/5 und 4/5 der Gesamthöhe der Dichtung ausgehend von ihrem Befestigungsbereich (3), sodass nach Anbringung der Dichtung an ihrem Träger der elastisch verformbare Bereich (5) dergestalt ist, dass er in dem besagten Winkel des Trägers eine Verformung im Querschnitt erfährt, die im Wesentlichen dem Querschnitt der Dichtung im freien Zustand entspricht.

2. Dichtung nach Anspruch 1, bei der ein Winkel (α) von etwa 20° zwischen den beiden Armen (12, 14) des elastisch verformbaren Bereichs (5) der Dichtung hergestellt wird.

3. Dichtung nach Anspruch 1 oder 2, bei der sich der obere Innenbereich (16) und der obere Außenbereich (18) der Decke des elastisch verformbaren Bereichs (5) im Wesentlichen zwischen zwei Kreisen (C1, C2) befinden, deren Mittelpunkte (01, 02) voneinander einen Abstand von über 0,7 mm aufweisen.

4. Dichtung nach einem der vorstehenden Ansprüche, bei der ein Höhenverlust (h) der Dichtung in einem Winkel mit niedrigem Krümmungsradius entsteht, der höchstens gleich 2,5 mm bei einem Winkel mit einem Krümmungsradius unter oder gleich 80 mm und in einem Winkel kleiner oder gleich 80° ist.

5. Dichtung nach einem der vorstehenden Ansprüche, bei der die Deckenform, die die beiden Arme (12, 14) des elastisch verformbaren Bereichs (5) der Dichtung verbindet, so vorgesehen ist, dass dieser Bereich, der die Dichtheit sicherstellt, im Querschnitt eine verringerte Breite aufweist, die die Positionierung der Dichtung auf ihrem Aufnahmeträger durch einen Roboter begünstigt.

6. Dichtung nach einem der vorstehenden Ansprüche, bei der der Befestigungsbereich (3) Auflagebereiche (19, 20) umfasst, die im Wesentlichen beidseits des Klebemittels (7) angeordnet sind, um die Verformung der Dichtung in einem Winkel ihres Aufnahmeträgers mit einem niedrigen Krümmungsradius zu begrenzen.

7. Dichtung nach einem der vorstehenden Ansprüche, bei der der Befestigungsbereich (3) der Dichtung mindestens einen Draht oder eine Umhüllung aufweist, der/die ihre Anbringung begünstigt, um ihre Dehnung bei der Anbringung zu verhindern.

8. Dichtung nach einem der vorstehenden Ansprüche, bei der Mittel (22) zur Abschwächung der Kompressibilitätskräfte der Dichtung vorgesehen sind.

9. Dichtung nach Anspruch 8, bei der die genannten Mittel (22) aus mindestens einer Materialverringerung (24) bestehen, die ein Scharnier bildet, das in dem elastisch verformbaren Bereich (5) der Dichtung vorgesehen ist.

10. Dichtung nach einem der vorstehenden Ansprüche, bei der die Dichtung geeignet ist, seitlich an ihren Träger (T) anzuliegen, um einen Halt ihres elastisch verformbaren Bereichs (5) zu begünstigen.

11. Dichtung nach einem der vorstehenden Ansprüche, bei der die Dichtung direkt auf ihren Träger montiert ist, ohne in einem Winkel mit niedrigem Krümmungsradius des Trägers besonders behandelt zu werden.

12. Dichtung nach einem der vorstehenden Ansprüche, bei der die Dichtung auf einem Montageband in Spulenform, in Form einer Platte oder eines Containers großer Länge gelagert und bereitgestellt wird.
